(19) Europäisches Patentamt

European Patent Office

Office européen des brevets

(11) **EP 1 486 797 A1**

(12) **EUROPÄISCHE PATENTANMELDUNG**

(43) Veröffentlichungstag:
**15.12.2004 Patentblatt 2004/51**

(51) Int Cl.⁷: **G01S 13/93**, G01S 13/87,
G01S 7/295

(21) Anmeldenummer: **04012673.2**

(22) Anmeldetag: **28.05.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **12.06.2003 DE 10326385**

(71) Anmelder: **Valeo Schalter und Sensoren GmbH
74321 Bietigheim-Bissingen (DE)**

(72) Erfinder:
• **Jecker, Nicolas
73728 Esslingen (DE)**
• **Eckstein, Oliver
71672 Marbach (DE)**
• **Wirkner, Klaus
74321 Bietigheim-Bissingen (DE)**

(74) Vertreter: **Dreiss, Fuhlendorf, Steimle & Becker
Patentanwälte,
Postfach 10 37 62
70032 Stuttgart (DE)**

(54) **Einparkhilfevorrichtung und Verfahren zur Ermittlung der Länge einer Parklücke**

(57) Die Erfindung betrifft eine Vorrichtung und ein Verfahren zur Ermittlung der Länge einer Parklücke. Derartige Verfahren sind aus dem Stand der Technik grundsätzlich bekannt. Den bekannten Vorrichtungen und Verfahren haftet jedoch der Nachteil an, dass sie die beiden Hindernisse, welche eine Parklücke begrenzen, nicht ohne Weiteres erfassen können. Um diesen Nachteil zu umgehen, schlägt die vorliegende Erfindung vor, eine vordere Sende- und Empfangseinrichtung im vorderen seitlichen Bereich des Fahrzeug und eine hintere Sende- und Empfangseinrichtung im hinteren seitlichen Bereich des Fahrzeugs anzuordnen, um mit diesen Einrichtungen jeweils ein anderes die Parklücke begrenzendes Hindernis zu erfassen.

## Fig. 4

EP 1 486 797 A1

**Beschreibung**

Die Erfindung betrifft eine Vorrichtung, ein Verfahren und ein Computerprogramm zur Ermittlung der Länge einer Parklücke zwischen einem hinteren und einem vorderen Hindernis, insbesondere zwischen einem hinteren und einem vorderen parkenden Fahrzeug.

Aus dem Stand der Technik sind Fahrzeuge bekannt, die Sende- und Empfangsvorrichtungen in Form von insbesondere Ultraschallsensoren umfassen, mit denen der Abstand des Fahrzeugs zu Gegenständen oder anderen parkenden Fahrzeugen bestimmt werden kann. Solche Systeme geben beispielsweise Hinweise, wenn ein Mindestabstand unterschritten wird, um eine Kollision des Fahrzeugs zu verhindern. In der Regel werden dabei wenigstens vier Sensoren im Frontbereich des Fahrzeugs und vier Sensoren im Heckbereich des Fahrzeugs verwendet. Die Sensoren im Frontbereich sind so angeordnet, dass zwei innen liegende Sensoren den Bereich vor dem Fahrzeug erfassen. Die außen liegenden Sensoren erfassen den Bereich, der schräg vor dem Fahrzeug und wenigstens abschnittsweise noch neben dem Fahrzeug liegt. Entsprechend sind an der Heckseite des Fahrzeugs ebenfalls zwei Sensoren innen liegend angeordnet, zur Erfassung des Bereichs hinter dem Fahrzeug. Zwei außen liegende Sensoren erfassen den Bereich schräg hinter dem Fahrzeug und wenigstens abschnittsweise den Bereich neben dem Fahrzeug.

Aus der DE 196 16 447 ist eine Vorrichtung und ein Verfahren bekannt geworden, das zur Ermittlung der Länge einer Parklücke geeignet ist. Demnach umfasst eine derartige Vorrichtung wenigstens eine Sende- und Empfangsvorrichtung zum Aussenden von wenigstens einem Strahlfeld auf die Hindernisse und zum Empfangen von Reflexionssignalen, welche das Strahlfeld nach seiner Reflexion an den Hindernissen und die Position des Fahrzeugs relativ zu den beiden Hindernissen repräsentieren. Darüber hinaus umfasst eine derartige Einparkhilfevorrichtung eine Auswerteeinrichtung zum Berechnen dieser Relativposition des Fahrzeugs aus den empfangenen Reflexionssignalen. Zum Berechnen der Länge der Parklücke ist bei diesem Stand der Technik erforderlich, den zurückgelegten Weg des Fahrzeugs bereitzustellen. Dieser wird beispielsweise aus der Geschwindigkeit des Fahrzeugs berechnet.

Aus der EP 0 783 114 A1 ist ein Verfahren zur Messung der Länge einer Parklücke bekannt geworden, bei dem über die am Fahrzeug angebrachten Sensoren die Länge der Parklücke unter Berücksichtigung des vom Fahrzeug zurückgelegten Weges berechnet wird. Die Sensoren erfassen dabei gleichzeitig zwei geparkte Autos. Die Sensoren haben hierbei eine sehr schmale Detektionskeule, wodurch über einen Ausrichtungswinkel der Detektionskeule zum Fahrzeug der jeweilige Abstand berechnet werden kann. Die sehr schmale Detektionskeule hat sich als problematisch herausgestellt, da sie bei zu großem seitlichen Abstand des Fahrzeugs zu den die Parklücke begrenzenden Gegenständen nicht zu groß sein darf. Im Übrigen sind spezielle Sensoren für die Bestimmung der Länge der Parklücke erforderlich.

Ausgehend von diesem Stand der Technik ist es die Aufgabe der Erfindung, eine bekannte Einparkhilfevorrichtung sowie ein entsprechendes bekanntes Verfahren und Computerprogramm derart weiterzubilden, dass sie ein Vermessen der Länge der Parklücke relativ zu den Hindernissen ermöglichen, aus denen heraus bisher keine Vermessung der Parklücke möglich war, weil die Hindernisse außerhalb des Erfassungsbereiches der jeweils verwendeten Sende- und Empfangsvorrichtungen lagen. Die Vermessung soll außerdem auf einfache Art und Weise erfolgen und ohne Berücksichtigung eines Wegmesssignals eines Wegsensors möglich sein.

Diese Aufgabe wird durch den Gegenstand des Patentanspruchs 1 gelöst.

Die erfindungsgemäße Anordnung der Sende- und Empfangseinrichtungen an dem Fahrzeug bietet den Vorteil, dass eine Erfassung von beiden, die Parklücke definierenden Hindernissen auch dann noch möglich ist, wenn das Fahrzeug auf Höhe der Parklücke vorgefahren ist. Bei einer derartigen Position des Fahrzeugs relativ zu den beiden Hindernissen wäre eine Erfassung beider Hindernisse bei Vorhandensein von lediglich einer Sende- und Empfangseinrichtung nahezu unmöglich, weil zumindest eines der Hindernisse vermutlich nicht mehr im Erfassungsbereich der einen Sende- und Empfangseinrichtung positioniert wäre.

Das Vorsehen von getrennten Sende- und Empfangseinrichtungen im vorderen und im hinteren seitlichen Bereich des Fahrzeugs bietet den Vorteil, dass eventuell bereits am Fahrzeug und insbesondere in den Stoßfängern des Fahrzeugs vorhandene Sende- und Empfangseinrichtungen, die bisher lediglich unabhängig voneinander für Abstandsmessungen beim Einparken vorgesehen waren, für die Zwecke der vorliegenden Erfindung verwendet werden können. Dazu bedarf es dann keiner Veränderung der Hardware, wohl aber einer Veränderung der Software, welche eine Auswertung von beiden Sende- und Empfangseinrichtungen gemäß der vorliegenden Erfindung vorsieht.

Gemäß einem ersten Ausführungsbeispiel ist es vorteilhaft, wenn die hintere und die vordere Sende- und Empfangseinrichtung in der Weise miteinander synchronisiert sind, dass sie ihre jeweiligen Strahlfelder gleichzeitig aussenden. Aufgrund der daraus resultierenden Reflexionssignale ist es möglich, die Position des Fahrzeugs relativ zu dem ersten Hindernis und gleichzeitig relativ zu dem zweiten Hindernis zu ermitteln. Aufgrund dieser beiden Relativpositionen, die sich auf den gleichen Betrachtungszeitpunkt beziehen, ist es möglich, die Länge der Parklücke L alleine aus diesen beiden Relativpositionen, ohne Berücksichtigung eines von dem Fahrzeug zurückgelegten Weges zu ermitteln.

Alternativ zu einer gleichzeitigen Aussendung der Strahlfelder durch die vordere und die hintere Sende- und Empfangseinrichtung besteht die Möglichkeit, dass diese beiden Einrichtungen ihre Strahlfelder zu unterschiedlichen Zeitpunkten t1, t2 aussenden. Die Länge der Parklücke kann dann aus der Relativposition des Fahrzeugs zu dem hinteren Hindernis zum Zeitpunkt t1 und aus der Relativposition des Fahrzeugs zu dem vorderen Hindernis zum Zeitpunkt t2 sowie unter zusätzlicher Berücksichtigung des vom Fahrzeug zurückgelegten Weges zwischen den beiden Relativpositionen berechnet werden.

Für die Berechnung der Abstände ist es vorteilhaft, wenn die Begrenzungen der Hindernisse möglichst genau erkannt werden; dann ist auch eine genauere Berechnung der Abstände möglich. Eine genauere Berechnung der Positionen der Begrenzung der Hindernisse wird vorteilhafterweise durch Auswerten von nicht nur einem, sondern einer Mehrzahl von pro Hindernis empfangenen Reflexionssignalen erreicht.

Dabei ist es besonders vorteilhaft, wenn die Reflexionssignale aus unterschiedlichen Richtungen von der beobachteten Begrenzung des Hindernisses empfangen werden.

Wie bereits oben erwähnt, ist es bei zeitlich versetzter Auswertung der Relativpositionen des Fahrzeugs zu den beiden Hindernissen erforderlich, für die Berechnung der Länge der Parklücke auch den von dem Fahrzeug zwischen den Zeitpunkt t1 und t2 zurückgelegten Weg zu berücksichtigen. Dieser Weg kann zum einen mit Hilfe eines traditionellen Weggebers im Fahrzeug ermittelt werden. Alternativ sieht die vorliegenden Erfindung vor, dass dieser zurückgelegte Weg durch Auswerten von mindestens zwei der von einem Hindernis empfangenen Reflexionssignale ermittelt wird. Letztere Variante bietet den Vorteil, dass ein Weggeber für diesen Zweck entbehrlich ist.

Schließlich ist es vorteilhaft, wenn die ermittelte Länge der Parklücke beziehungsweise die Position des Fahrzeugs relativ zur Parklücke oder der Schwierigkeitsgrad zum Einparken des Fahrzeug in die Parklücke mit Hilfe einer Anzeigevorrichtung angezeigt wird.

Die oben genannte Aufgabe wird weiterhin durch ein Verfahren und ein Computerprogramm gelöst. Die Vorteile dieses Verfahrens sowie des Computerprogramms entsprechen den oben mit Bezug auf die Einparkhilfevorrichtung genannten Vorteilen.

Weitere Vorteile der Vorrichtung, des Verfahrens oder des Computerprogramms sind Gegenstand der Unteransprüche.

Zeichnungen

In den Zeichnungen zeigen:

Figur 1    eine für die Bestimmung der Parklücke gemäß der Erfindung typische Ausgangssituation;

Figur 2    die Einparkhilfevorrichtung gemäß der Erfindung;

Figur 3    eine für die Berechnung der Parklücke gemäß der Erfindung vorteilhafte Relativposition des Fahrzeugs zu zwei parkenden Fahrzeugen; und

Figur 4    ein Ausführungsbeispiel für die erfindungsgemäße Sende- und Empfangseinrichtung.

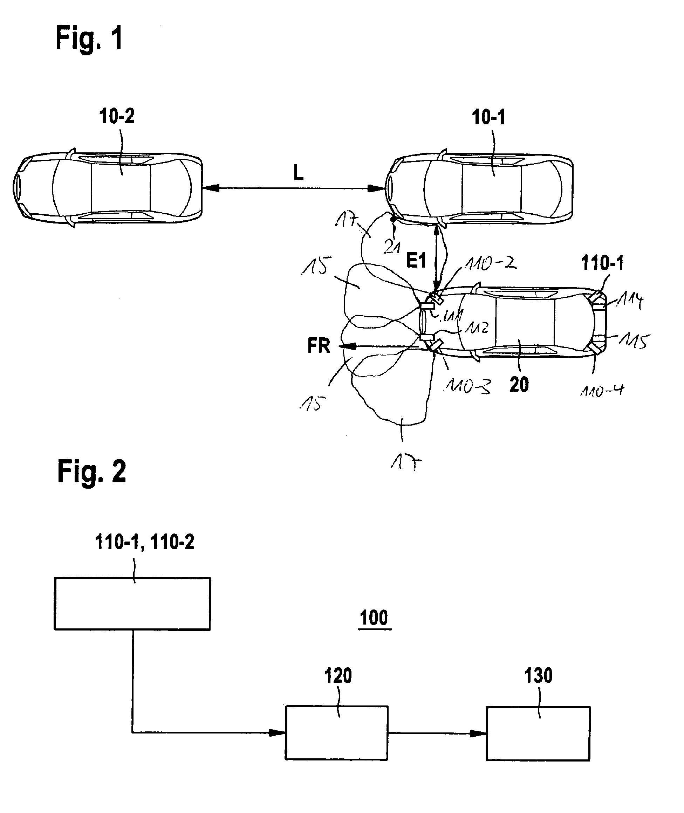

Figur 1 zeigt eine für die Erfindung typische Ausgangssituation zur Bestimmung der Länge L einer Parklücke zwischen einem hinteren und einem vorderen Hindernis. In Figur 1 wird das hintere Hindernis durch ein hinteres Fahrzeug 10-1 und das vordere Hindernis durch ein vorderes parkendes Fahrzeug 10-2 gebildet. Die Länge L der Parklücke entspricht dem Abstand zwischen diesen beiden parkenden Fahrzeugen.

Die erfindungsgemäße Einparkhilfevorrichtung ist vorzugsweise in einem Fahrzeug 20 eingebaut, welches in Fahrtrichtung FR zunächst an dem hinteren parkenden Fahrzeug 10-1 und später an der Parklücke vorbeifährt und währenddessen die Parklücke vermisst.

Zu diesem Zweck weist das Fahrzeug 20 eine Einparkhilfevorrichtung 100 gemäß Figur 2 auf. Diese umfasst im vorderen seitlichen Bereich des Fahrzeugs eine vordere Sende- und Empfangseinrichtung 110-2 und zum Aussenden eines ersten Strahlfeldes und im hinteren seitlichen Bereich des Fahrzeugs auf der gleichen Seite eine hintere Sende- und Empfangseinrichtung 110-1 zum Aussenden eines zweiten Strahlfeldes. In der in Figur 1 gezeigten Ausgangssituation wird mindestens eine der Sende-und Empfangseinrichtungen 110-1, 110-2 zunächst nur dafür verwendet, den seitlichen Abstand E1 zwischen dem Fahrzeug 20 und dem parkenden Fahrzeug 10-1 zu ermitteln. Die Sende-und Empfangseinrichtung 110-2 ist Bestandteil eines an sich bekannten Kollisionswarnsystems, welches Hinweise an den Fahrer gibt, falls sich Gegenstände im Nahbereich des Fahrzeugs befinden. Das Kollision-Warnsystem umfasst in der Regel im Fahrzeugfrontbereich insgesamt vier Sende- und Empfangseinrichtungen in Form von Ultraschallsensoren. Zwei innen liegende Sende- und Empfangseinrichtungen 111 und 112 strahlen dabei jeweils ein Strahlfeld aus, dessen Keule 15 im Wesentlichen in Fahrtrichtung weist. Die Sende- und Empfangseinrichtungen 110-2 und 110-3 befinden sich im Übergangsbereich zwischen der Frontseite des Fahrzeuges und den Seitenbereichen. Ihre Abstrahlkeulen 17 erfassen den seitlich neben und vor dem Fahrzeug liegenden Nahbereich.

An der Heckseite des Fahrzeugs 20 sind neben den hinteren Sende- und Empfangseinrichtungen 110-1 und 110-4 zwei weitere Sende- und Empfangseinrichtungen 114 und 115 angeordnet. Diese Sende- und Empfangseinrichtungen 114, 115 weisen eine Abstrahlkeule auf, die im Wesentlichen den Nahbereich hinter dem Fahrzeug abdeckt. Die beiden seitlichen Sende- und Empfangseinrichtungen 110-1 und 110-4 decken entsprechen den Abstrahlkeulen 17 den seitlich neben dem Fahrzeug 20 liegenden Nahbereich ab. Die Abstrahlkeulen der Sensoren 110-1 und 110-4 sowie der Sensoren 114 und 115 sind in der Figur 1 nicht dargestellt.

Die Ermittlung des seitlichen Abstandes E1 erfolgt mit Hilfe einer Auswerteeinrichtung 120, siehe Figur 2, der Einparkhilfevorrichtung 100 durch Auswerten von empfangenen Reflexionssignalen, welche das ausgesendete Strahlfeld nach seiner Reflexion an dem parkenden Fahrzeug 10-1 repräsentieren. Der seitliche Abstand E1 ist eine Größe, die später zur Bestimmung der Relativposition des Fahrzeugs 20 in Bezug auf das parkenden Fahrzeug 10-1 von Bedeutung ist.

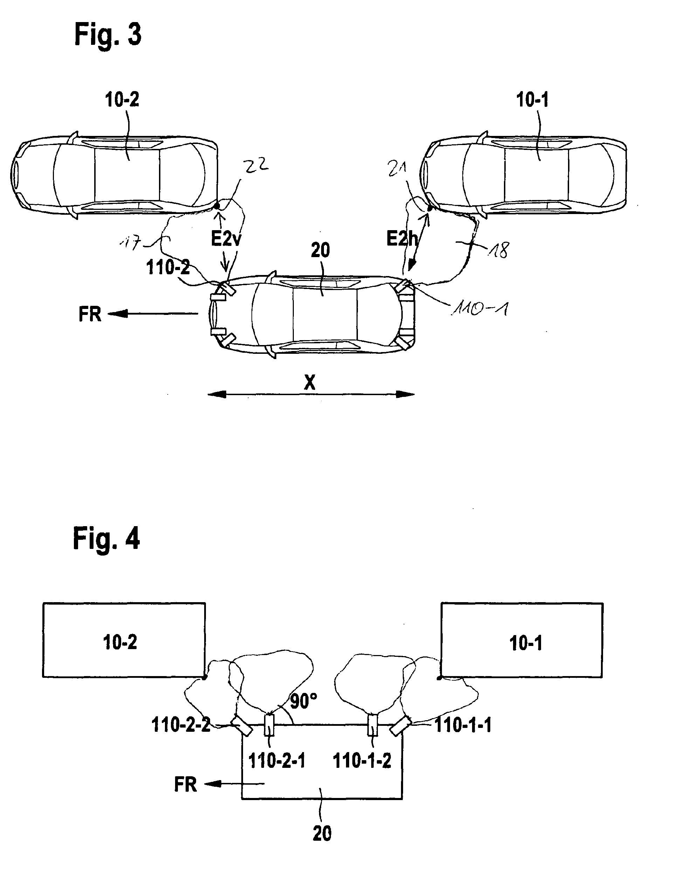

Figur 3 zeigt die Position des Fahrzeug 20 relativ zu den beiden parkenden Fahrzeugen 10-1 und 10-2 zu einem späteren Zeitpunkt im Vergleich zu Figur 1. Zu diesem späteren Zeitpunkt hat sich das Fahrzeug gegenüber der in Figur 1 gezeigten Ausgangssituation ein Stück weit in Fahrtrichtung FR bewegt und steht nun auf Höhe der Parklücke. Die Relativposition des Fahrzeugs 20 zu dem hinteren parkenden Fahrzeug 10-1 ist durch den seitlichen Abstand E1 sowie durch den direkten Abstand E2h zwischen der hinteren Sende-und Empfangseinrichtung 110-1 und dem hinteren parkenden Fahrzeug 10-1, genauer gesagt zu dessen vorderer linker Flanke definiert. Gleichzeitig ist die relative Position des Fahrzeugs 20 zu dem vorderen parkenden Fahrzeug 10-2 durch den direkten Abstand E2v der vorderen Sende- und Empfangseinrichtung 110-2 zu dem vorderen parkenden Fahrzeug 10-2, genauer gesagt zu dessen hinteren linken Flanke und dem seitlichen Abstand zwischen dem Fahrzeug 20 und dem parkenden Fahrzeug 10-2 definiert; letzterer kann vereinfachend als betraglich gleich mit dem seitlichen Abstand E1 angesehen werden.

Beim Vorbeifahren des Fahrzeugs 20 an dem stehenden Fahrzeug 10-1 wird der Beginn der Parklükke dann detektiert, wenn die Sende- und Empfangseinrichtung 110-2 den vorderen Eckbereich 21 des Fahrzeugs 10-1 detektiert. Der mittels einer Echolokalisierung detektierte Bereich 21 wird als Referenzpunkt verwendet. Der Abstand E2h zu diesem Referenzpunkt wird während des Weiterfahrens entlang der Parklücke bestimmt. Entsprechend wird von der Sende- und Empfangseinrichtung 110-2 das Fahrzeug 10-2 erfasst. Dabei wird der dem Fahrzeug 20 zugewandte Eckbereich 22 des Fahrzeugs 10-2 als zweiter Referenzpunkt mittels Echolokalisierung bestimmt. Beim weiteren Fahren des Fahrzeugs in Richtung FR wird der Abstand des Fahrzeugs 20, beziehungsweise der Sende- und Empfangseinrichtung 110-2 zu diesem Referenzbereich 22 bestimmt. Dieser Abstand wird in der Figur 3 bezeichnet mit E2v.

Gemäß der Erfindung ist nun die vordere Sende- und Empfangseinrichtung 110-2 ausgebildet zum Aussenden eines ersten Strahlfeldes 17 auf das vordere parkende Fahrzeug 10-2 zur Ermittlung von insbesondere dem Abstand E2v und die hintere Sende- und Empfangseinrichtung 110-1 ausgebildet zum Aussenden eines zweiten Strahlfeldes 18 auf das hintere parkende Fahrzeug 10-1 und insbesondere zum Berechnen des direkten Abstandes E2h.

Gemäß einem ersten Ausführungsbeispiel der Erfindung ist es vorteilhaft, wenn die hintere und die vordere Sende- und Empfangseinrichtung 110-1, 110-2 in der Weise miteinander synchronisiert sind, dass sie ihre jeweiligen Strahlfelder zu einem Zeitpunkt, das heißt gleichzeitig aussenden. Bezogen auf die in Figur 3 gezeigte Situation bedeutet dies, dass die hintere Sende- und Empfangseinrichtung 110-1 ein zweites Strahlfeld 18 auf das hintere parkende Fahrzeug 10-1 aussendet, während gleichzeitig die vordere Sende- und Empfangseinrichtung 110-2 ein erstes Strahlfeld 17 auf das vordere parkende Fahrzeug 10-2 aussendet. Die Auswerteeinrichtung 120 ist dann so ausgebildet, dass sie die oben beschriebene Relativposition in Bezug auf die beiden Hindernisse 110-1 und 110-2 durch Auswerten von empfangenen Reflexionssignalen, die aus der Reflexion der ausgesendeten Strahlfelder an den Hindernissen resultieren, ermitteln kann.

An dieser Stelle sei besonders betont, dass bei der gleichzeitigen Aussendung der Strahlfelder gemäß dem ersten Ausführungsbeispiel die Position des Fahrzeugs 20 absolut gesehen unverändert bleibt und relativ gesehen in Bezug auf die beiden parkenden Fahrzeuge zu ein und demselben Zeitpunkt betrachtet wird.

Unter diesen Voraussetzungen des ersten Ausführungsbeispiels der Erfindung ist die Auswerteeinrichtung 120 ausgebildet, die Länge L der Parklücke gemäß der folgenden Formel zu berechnen:

$$L = X + E2v \sin \left(\cos^{-1}\left(\frac{E1}{E2v}\right) + E2h \sin \left(\cos^{-1}\left(\frac{E1}{E2h}\right)\right),$$

wobei

X  den Abstand zwischen der hinteren und der vorderen Sende- und Empfangseinrichtung 110-1, 110-2;

E1  den seitlichen Abstand des Fahrzeugs 20 zu Fahrzeug 10-1 und/oder 10-2;

E2v  den direkten Abstand der vorderen Sende- und Empfangseinrichtung 110-2 zu dem vorderen parkenden Fahrzeug; und

E2h  den direkten Abstand der hinteren Sende- und Empfangseinrichtung 110-1 zu dem hinteren parkenden Fahrzeug

repräsentiert. Vorteil ist, dass hierbei kein Wegsignal berücksichtigt werden muss, das den von dem Fahrzeug zurückgelegten Weg bestimmt. Das erfindungsgemäße System ist folglich unabhängig von anderen Sensoren, beispielsweise ABS-Sensoren oder Wegsensoren.

Vorteilhafterweise wird die beschriebene Berechnung der Länge L der Parklücke während des Vorbeifahrens des Fahrzeugs an der Parklücke mehrfach wiederholt durchgeführt. Über eine gleitende Mittelwertbildung kann beispielsweise die Länge der Parklücke vergleichsweise genau bestimmt werden.

Die Bereiche 21 und 22 an den parkenden Fahrzeugen können dabei geringfügig, plus/minus wenige Zentimeter, "wandern". Über die Mittelwertbildung wird dennoch ein vergleichsweise genauer Wert bestimmt.

Alternativ zu dem ersten Ausführungsbeispiel besteht gemäß einem zweiten Ausführungsbeispiel der Erfindung die Möglichkeit, dass die hintere und die vordere Sende- und Empfangseinrichtung 110-1, 110-2 ihre Strahlfelder zu unterschiedlichen Zeitpunkten t1 und t2 aussenden. Dann ist es erforderlich, dass die Auswerteeinrichtung 120 bei der Berechnung der Länge L der Parklücke neben der Relativposition des Fahrzeugs 20 zu dem hinteren parkenden Fahrzeug 10-1 zum Zeitpunkt t1 und der Relativposition des Fahrzeugs 20 zu dem vorderen parkenden Fahrzeug 10-2 zu dem Zeitpunkt t2 auch den von dem Fahrzeug zwischen den beiden Zeitpunkten t1 und t2 zurückgelegten Weg berücksichtigt. Dieser zurückgelegte Weg kann erfindungsgemäß auch durch Auswerten einer Mehrzahl von zeitlich nacheinander ausgesandten Reflexionssignalen, die von einem der beiden Hindernisse empfangen werden, ermittelt werden.

Für beide Ausführungsbeispiele der Erfindung ist es vorteilhaft, wenn zur Bestimmung der Abstände E2v oder E2h des Fahrzeugs 20 zu den parkenden Fahrzeugen 10-1, 10-2 die Position dieser parkenden Fahrzeuge und insbesondere von deren Flanken, beziehungsweise Eckbereiche 21 und 22, welche die Strahlfelder reflektieren, genau ermittelt werden können. Für eine derartige präzise Bestimmung ist es vorteilhaft, wenn nicht unbedingt das jeweils erste empfangene Reflexionssignal, sondern das jeweils zweite empfangene Reflexionssignal oder mehrere empfangene Reflexionssignale ausgewertet werden. Dazu empfiehlt sich zum Beispiel ein Aufbau der Sende- und Empfangseinrichtungen 110-1 und 110-2 gemäß Figur 4.

Gemäß Figur 4 weisen die einzelnen Sende- und Empfangseinrichtungen jeweils ein Sende- und Empfangselement 110-1-1, 110-2-2 sowie jeweils zusätzlich noch ein weiteres reines Empfangselement 110-1-2 und 110-2-1 auf. Dabei dienen die reinen Empfangselemente 110-1-2 und 110-2-1 jeweils zum Empfang von Reflexionssignalen, die von Schallfeldern ihrer zugehörigen Sende- und Empfangselemente 110-2-2 und 110-1-1 herrühren. Sie sind allerdings auf jeweils eine andere Empfangsrichtung ausgerichtet und ermöglichen so auch den Empfang von Reflexionssignalen aus anderen Richtungen. Die von ein und demselben Hindernis empfangenen Reflexionssignale aus unterschiedlichen Richtungen ermöglichen eine genauere Berechnung der Position des jeweils angestrahlten beziehungsweise zu betrachtenden Hindernisses. Wie bereits oben erwähnt, ermöglicht eine solche genauere Positionsberechnung letztendlich auch eine genauere Berechnung der Länge L der Parklücke mit Hilfe des Verfahrens der Triangulation.

Schließlich ist es ebenfalls für beide Ausführungsbeispiele der Erfindung vorteilhaft, wenn die Einparkhilfevorrichtung eine in Figur 2 gezeigte Anzeigevorrichtung 130 aufweist. Eine derartige Anzeigevorrichtung ist vorzugsweise im Blickbereich des Fahrers des Fahrzeugs 20 angeordnet und dient dazu, insbesondere dem Fahrer die Länge der Parklücke, die Position seines Fahrzeugs 20 in Bezug auf die Parklücke und/oder den Schwierigkeitsgrad zum Einparken des Fahrzeugs 20 in die Parklücke akustisch und/oder optisch anzuzeigen. Sie kann als Display oder Leuchtdiodenanordnung ausgebildet sein. Insbesondere bei einer Leuchtdiodenanordnung bedeutet das Aufleuchten von rotem Licht, dass ein Einparken des Fahrzeugs in die Parklücke nicht möglich ist, ein Aufleuchten von gelbem oder orangem Licht, dass ein Einparken des Fahrzeugs in die Parklücke nur unter Schwierigkeiten möglich ist und das Aufleuchten von grünem Licht, dass ein Einparken in die Parklücke problemlos möglich ist.

Das erfindungsgemäße Verfahren zur Realisierung einer Einparkhilfevorrichtung für ein Kraftfahrzeug wird vorteilhafterweise als Computerprogramm für eine Einparkhilfevorrichtung realisiert. In diesem Fall ist es möglich, dass das entsprechende Computerprogramm gegebenenfalls zusammen mit weiteren Computerprogrammen auf einem computerlesbaren Datenträger abgespeichert ist. Bei dem Datenträger kann es sich um eine Diskette, eine Compact Disc, einem Flash-Memory etc. handeln. Das auf dem Datenträger abgespeicherte Computerprogramm kann dann als Produkt an einen Kunden verkauft werden.

Außerdem ist es im Falle einer Realisierung des Verfahrens als Computerprogramm möglich, dass dieses Programm gegebenenfalls wiederum zusammen mit weiteren Computerprogrammen - ohne die Zuhilfenahme eines Datenträgers - über ein elektronisches Kommunikationsnetzwerk, insbesondere das Internet, an einen Kunden übertragen und auf diese Weise verkauft wird.

### Patentansprüche

1. Einparkhilfevorrichtung (100) für ein Fahrzeug (20) zur Ermittlung der Länge L einer Parklücke zwischen einem hinteren und einem vorderen Hindernis (10-1, 10-2), insbesondere zwischen einem hinteren und einem vorderen parkenden Fahrzeug, umfassend:

   eine vordere, im vorderen seitlichen Bereich des Fahrzeugs (20) angeordnete Sende- und Empfangseinrichtung (110) zum Aussenden von wenigstens einem Strahlfeld auf ein seitlich vor/neben dem Fahrzeug vorhandenes Hindernis (10-1, 10-2) und zum Empfangen von Reflexionssignalen nach der Reflexion an diesem Hindernis;

eine hintere, im hinteren seitlichen Bereich des Fahrzeugs (20) angeordnete Sende- und Empfangseinrichtung (110) zum Aussenden von wenigstens einem Strahlfeld auf ein seitlich hinter/neben dem Fahrzeug vorhandenes Hindernis (10-1, 10-2) und zum Empfangen von Reflexionssignalen nach der Reflexion an diesem Hindernis; und

eine Auswerteeinrichtung (120) zum Berechnen der Relativposition des Fahrzeugs zu den Hindernissen aus ausschließlich den empfangenen Reflexionssignalen und zum Berechnen der Länge L der Parklücke auf Basis dieser Relativposition.

2. Einparkhilfevorrichtung (100) nach Anspruch 1, **dadurch gekennzeichnet, dass** sämtliche Sende- und Empfangseinrichtungen Ultraschallsensoren sind, die am Fahrzeug auch zur Abstandsmessung von Hindernissen vorgesehen und Bestandteil eines Kollisionswarnsystems, insbesondere beim Einparkvorgang, sind.

3. Einparkhilfevorrichtung (100) nach Anspruch 1 oder 2, **dadurch gekennzeichnet, dass** die vordere und/oder die hintere und/oder eine weitere Sende- und Empfangseinrichtung dazu geeignet ist, insbesondere während des Vorbeifahrens am Hindernis, ein Strahlfeld auszusenden und Reflexionssignale zu empfangen, aus denen der seitliche Abstand des Fahrzeugs zum vorderen und/oder hinteren Hindernis bestimmbar ist.

4. Einparkhilfevorrichtung (100) nach Anspruch 1,2 oder 3, **dadurch gekennzeichnet, dass**

- die hintere und die vordere Sende- und Empfangseinrichtung (110-1, 110-2) in der Weise miteinander synchronisiert sind, dass sie ihre jeweiligen Strahlfelder zu einem Zeitpunkt gleichzeitig aussenden; und dass
- die Auswerteeinrichtung (120) ausgebildet ist, die Relativposition des Fahrzeugs (20) in Bezug auf die beiden Hindernisse zu diesem Zeitpunkt aus den empfangenen Reflexionssignalen in Form des Abstandes (E2h) des Fahrzeugs (20) zu dem hinteren Hindernis (10-1), des seitlichen Abstandes (E1) des Fahrzeugs zu einem der beiden Hindernisse und des Abstandes (E2v) des Fahrzeugs zu dem vorderen Hindernis (10-2) zu ermitteln.

5. Einparkhilfevorrichtung (100) nach einem der vorhergehenden Ansprüche, **dadurch gekennzeichnet, dass** die Auswerteeinrichtung (120) ausgebildet ist, die Länge L der Parklücke aus der zuvor ermittelten Relativposition gemäß folgender Formel zu berechnen:

$$L = X + E2v \sin\left(\cos^{-1}\left(\frac{E1}{E2v}\right) + E2h \sin\left(\cos^{-1}\left(\frac{E1}{E2h}\right)\right),$$

wobei

X den Abstand zwischen der ersten und der zweiten Sende- und Empfangseinrichtung;

E2v den Abstand des Fahrzeugs zu dem vorderen Hindernis;

E2h den Abstand des Fahrzeugs zu dem hinteren Hindernis; und

E1 den seitlichen Abstand des Fahrzeugs zu einem der beiden Hindernisse;

repräsentiert.

6. Einparkhilfevorrichtung (100) nach Anspruch 1, 2 oder 3, **dadurch gekennzeichnet, dass** die hintere und vordere Sende- und Empfangseinrichtung (110-1, 110-2) ihre Strahlfelder zu unterschiedlichen Zeitpunkten t1, t2 aussenden; und die Auswerteeinrichtung (120) ausgebildet ist, den Abstand (E2h) des Fahrzeugs zu dem hinteren Hindernis zum Zeitpunkt t1, den Abstand (E2v) des Fahrzeugs zu dem vorderen Hindernis zum Zeitpunkt t2, und die Länge L der Parklücke aus den beiden Abständen und unter zusätzlicher Berücksichtigung des seitlichen Abstandes (E1) des Fahrzeugs (20) von einem der beiden Hindernisse und des von dem Fahrzeug zwischen den beiden Zeitpunkten t1 und t2 zurückgelegten Weges zu bestimmen.

7. Einparkhilfevorrichtung nach einem der vorangegangenen Ansprüche, **dadurch gekennzeichnet, dass** die Auswerteeinrichtung (120) ausgebildet ist, die Relativposition des Fahrzeugs (20) in Bezug auf die Hindernisse, insbesondere die Abstände des Fahrzeugs zu den Hindernissen, auf Basis einer Mehrzahl von pro Hindernis empfangenen Reflexionssignalen auszuwerten.

8. Einparkhilfevorrichtung (100) nach Anspruch 7, **dadurch gekennzeichnet, dass** die hintere und/oder die vordere Sende- und Empfangseinrichtung (110-1, 110-2) mindestens zwei in jeweils unterschiedliche Richtungen ausgerichtete Empfangselemente (110-1-1, 110-1-2, 110-2-1, 110-2-2) aufweist zum Empfangen der Mehrzahl von Reflexionssignalen von dem jeweils angestrahlten Hindernis.

9. Einparkhilfevorrichtung (100) nach einem der Ansprüche 4 bis 8, **dadurch gekennzeichnet, dass** die Auswerteeinrichtung (120) ausgebildet ist, den von dem Fahrzeug (20) zwischen den Zeitpunkten t1 und t2 zurückgelegten Weg durch Auswerten von mindestens zwei der von einem Hindernis empfangenen Reflexionssignale zu ermitteln.

10. Einparkhilfevorrichtung (100) nach einem der vorangegangenen Ansprüche, **gekennzeichnet durch** eine Anzeigevorrichtung (130) zum akustischen und/oder optischen Anzeigen der Parklückenlänge (L) und/oder des Schwierigkeitsgrades zum Einparken des Fahrzeugs (20) in die Parklücke.

11. Einparkhilfevorrichtung (100) nach einem der vorhergehenden Ansprüche, **dadurch gekennzeichnet, dass** sie zur Durchführung des Verfahrens nach einem der Ansprüche 12 bis 17 geeignet ist.

12. Verfahren zur Ermittlung der Länge (L) einer Parklücke zwischen einem hinteren und einem vorderen Hindernis (10-1, 10-2), insbesondere zwischen einem hinteren und einem vorderen parkenden Fahrzeug, umfassend die Schritte:

   Aussenden von wenigstens einem Strahlfeld auf ein seitlich vor dem Fahrzeug vorhandenes Hindernis (10-1, 10-2) und Empfangen von Reflexionssignalen nach der Reflexion an diesem Hindernis;
   Aussenden von wenigstens einem Strahlfeld auf ein seitlich hinter dem Fahrzeug vorhandenes Hindernis (10-1, 10-2) und Empfangen von Reflexionssignalen nach der Reflexion an diesem Hindernis;
   Aussenden eines Strahlenfeldes und Empfangen von Reflexionssignale, aus denen der seitlichen Abstand des Fahrzeugs zum vorderen und/oder hinteren Hindernis bestimmbar ist;
   Berechnen der Relativposition des Fahrzeugs zu den Hindernissen aus ausschließlich den empfangenen Reflexionssignalen und Berechnen der Länge L der Parklücke auf Basis dieser Relativposition.

13. Verfahren nach Anspruch 12, **dadurch gekennzeichnet, dass** das erste und das zweite Strahlfeld gleichzeitig ausgesendet werden; und die Ermittlung der Relativposition des Fahrzeugs (20) zum Zeitpunkt t1 in Bezug auf die beiden Hindernisse aus den empfangenen Reflexionssignalen in Form des Abstandes (E2h) des Fahrzeugs zu dem hinteren Hindernis, des seitlichen Abstandes (E1) des Fahrzeugs zu einem der beiden Hindernisse und des Abstandes (E2v) des Fahrzeugs (20) zu dem vorderen Hindernis erfolgt.

14. Verfahren nach Anspruch 12 oder 13, **dadurch gekennzeichnet, dass** die Länge L der Parklücke aus der zuvor ermittelten Relativposition gemäß folgender Formel:

$$L = X + E2v \sin (\cos^{-1} (\frac{E1}{E2v}) + E2h \sin (\cos^{-1}(\frac{E1}{E2h}),$$

berechnet wird, wobei

   X　　den Abstand zwischen der ersten und der zweiten Sende-und Empfangseinrichtung;
   E2v　den Abstand des Fahrzeugs zu dem vorderen Hindernis;
   E2h　den Abstand des Fahrzeugs zu dem hinteren Hindernis; und
   E1　　den seitlichen Abstand des Fahrzeugs zu einem der beiden Hindernisse;

repräsentiert.

15. Verfahren nach Anspruch 12 oder 13, **dadurch gekennzeichnet, dass** das erste und das zweite Strahlfeld zu unterschiedlichen Zeitpunkten t1, t2 ausgesandt werden; und der Abstand (E2h) des Fahrzeugs zu dem hinteren Hindernis zum Zeitpunkt t1, der Abstand (E2h) des Fahrzeugs zu dem vorderen Hindernis zum Zeitpunkt t2, der seitliche Abstand (E1) des Fahrzeugs von einem der beiden Hindernisse und die Länge (L) der Parklücke aus den Abständen und unter zusätzlicher Berücksichtigung des von dem Fahrzeug zwischen den beiden Zeitpunkten t1 und t2 zurückgelegten Weges bestimmt wird.

16. Verfahren nach einem der Ansprüche 12 - 15, **dadurch gekennzeichnet, dass** die Relativposition des Fahrzeugs (20) in Bezug auf die Hindernisse (10-1, 10-2), insbesondere der Abstände des Fahrzeugs zu den Hindernissen, auf Basis einer Mehrzahl von pro Hindernis, vorzugsweise aus unterschiedlichen Richtungen empfangenen Reflexionssignalen ermittelt wird.

17. Verfahren nach Anspruch 16, **dadurch gekennzeichnet, dass** der von dem Fahrzeug zwischen den Zeitpunkten t1 und t2 zurückgelegte Weg durch Auswerten von mindestens zwei der von einem Hindernis empfangenen Reflexionssignale ermittelt wird.

18. Computerprogramm mit Programmcode für eine Einparkhilfevorrichtung (100) **dadurch gekennzeichnet, dass** der Programmcode ausgebildet ist zur Durchführung des Verfahrens nach einem der Ansprüche 12 - 17.

19. Computerprogramm nach Anspruch 18, **dadurch**

**gekennzeichnet, dass** der Programmcode auf einem computerlesbaren Datenträger abgespeichert ist.

**Fig. 1**

**Fig. 2**

## Fig. 3

**10-2**  **10-1**

22

21

17

E2v

18

**110-2**  **20**  E2h

**FR** ←  110-1

**X**

## Fig. 4

**10-2**  **10-1**

90°

**110-2-2**  **110-1-1**

**110-2-1**  **110-1-2**

**FR** ←

**20**

**Europäisches Patentamt**

## EUROPÄISCHER RECHERCHENBERICHT

Nummer der Anmeldung

EP 04 01 2673

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 2 319 420 A (FORD MOTOR CO) 20. Mai 1998 (1998-05-20) <br><br> * Seite 2 - Seite 5; Abbildungen * <br> ----- | 1,3,4,7, 8,10-12, 18,19 | G01S13/93 <br> G01S13/87 <br> G01S7/295 |
| A | US 4 931 930 A (CHUANG CHING-WANG ET AL) 5. Juni 1990 (1990-06-05) <br> * Spalte 2, Zeile 25 - Spalte 6, Zeile 2; Abbildungen 1-5 * <br> ----- | 2-4,13, 16 | |
| A,D | EP 0 783 114 A (RENAULT) 9. Juli 1997 (1997-07-09) <br> * Seite 3, Spalte 55 - Seite 9, Spalte 55; Abbildungen 1-7B * <br> ----- | 5,14,17 | |
| A | GB 2 378 597 A (ROKE MANOR RESEARCH) 12. Februar 2003 (2003-02-12) <br> * Seite 2 - Seite 3; Abbildungen * <br> ----- | 6,9,13, 15 | |
| D,A | DE 196 16 447 A (BOSCH GMBH ROBERT) 30. Oktober 1997 (1997-10-30) <br> * das ganze Dokument * <br> ----- | 1-17 | **RECHERCHIERTE SACHGEBIETE (Int.Cl.7)** <br><br> G01S <br> B60Q |

Der vorliegende Recherchenbericht wurde für alle Patentansprüche erstellt

| Recherchenort | Abschlußdatum der Recherche | Prüfer |
|---|---|---|
| Den Haag | 5. Oktober 2004 | Devine, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 04 01 2673

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2004

| Im Recherchenbericht angeführtes Patentdokument | | Datum der Veröffentlichung | Mitglied(er) der Patentfamilie | | Datum der Veröffentlichung |
|---|---|---|---|---|---|
| GB 2319420 | A | 20-05-1998 | KEINE | | |
| US 4931930 | A | 05-06-1990 | DE | 3813083 A1 | 02-11-1989 |
| | | | FR | 2630075 A1 | 20-10-1989 |
| EP 0783114 | A | 09-07-1997 | FR | 2743150 A1 | 04-07-1997 |
| | | | FR | 2743151 A1 | 04-07-1997 |
| | | | EP | 0783114 A1 | 09-07-1997 |
| GB 2378597 | A | 12-02-2003 | WO | 03014765 A1 | 20-02-2003 |
| DE 19616447 | A | 30-10-1997 | DE | 19616447 A1 | 30-10-1997 |

EPO FORM P0461

Für nähere Einzelheiten zu diesem Anhang : siehe Amtsblatt des Europäischen Patentamts, Nr.12/82